# EUROPEAN PATENT APPLICATION

(11) **EP 3 491 909 A1**
(43) Date of publication of application: **05.06.2019**
(21) Application number: 18205694.5
(22) Date of filing: 12.11.2018
(51) Int. Cl.: A01F 25/20, A01F 29/00, B66C 3/02

(54) **BUCKET GRABBER FOR GRABBING FEED, ATTACHABLE AND DETACHABLE CUTTING DEVICE FOR A BUCKET GRABBER, AUTOMATIC FEEDING SYSTEM FOR FARM ANIMALS PROVIDED WITH THE BUCKET GRABBER**

(30) Priority: 04.12.2017 NL 2020010
(71) Applicant: Triodor Arge, 34852 Istanbul (TR)
(72) Inventor: ILKER, Mert, 34909 Pendik - Istanbul (TR); KOORN, Maarten, 3147 PB Maassluis (NL)
(74) Representative: Octrooibureau Van der Lely N.V.

(57) **Abstract**

A bucket grabber for grabbing feed is provided with an attachable and detachable cutting device for cutting feed and/or feed wrapping material. A simple bucket grabber being widely applicable is provided. The invention further relates to an attachable and detachable cutting device for a bucket grabber, wherein the cutting device is automatically attachable and detachable on the outside of the bucket grabber by means of an attachment frame with attachment means. An efficient enhancement of the bucket grabber is enabled. The invention further relates to an automatic feeding system for farm animals provided with the bucket grabber according to the invention. Thus, an improved feeding system is provided. The invention further relates to a method of cutting a bale of feed using a bucket grabber's closing force, wherein a cutting device with cutting blades is automatically attached to the bucket grabber such that a cutting action is achievable by opening/closing the bucket grabber halves. In this way, cutting a bale of feed is rendered possible without the need for an additional power source.

## Description

The present invention relates to a bucket grabber for grabbing feed.

Such devices are used e.g. in automatic feeding systems, such as the Lely Vector®, for processing feed for livestock and are known in the art, e.g. from EP 2 820 942 A2. The bucket feed grabber described therein has a rather complex construction with circular saws fixedly provided inside the grabber halves. There is a need for a simpler, yet flexible bucket grabber.

It is an object of the present invention to provide a simple bucket grabber being widely applicable.

The invention achieves the object at least in part by means of a bucket grabber according to claim 1, in particular a bucket grabber for grabbing feed, wherein the bucket grabber is provided with an automatically attachable and detachable cutting device for cutting feed and/or feed wrapping material.

The automatically attachable and detachable cutting device on the one hand constitutes a simple construction and on the other hand improves the applicability of the bucket grabber. No permanent modification is required.

The invention further relates to an automatically attachable and detachable cutting device for a bucket grabber, wherein the cutting device is automatically attachable and detachable on the outside of the bucket grabber by means of an attachment frame with attachment means. In this way, an efficient enhancement of the bucket grabber is enabled.

The invention further relates to an automatic feeding system for farm animals provided with the bucket grabber according to the invention. Thus, an improved feeding system is provided.

The invention further relates to a method of cutting a bale of feed using a bucket grabber's closing force, wherein a cutting device with cutting blades is automatically attached to the bucket grabber such that a cutting action is achievable by opening/closing the bucket grabber halves. In this way, cutting a bale of feed is rendered possible without the need for an additional power source.

Suitable and advantageous embodiments are described in the dependent claims, as well as in the description below.

In a first embodiment of the bucket feed grabber the cutting device is automatically attachable and detachable. This results in a user-friendly device.

In a further embodiment, the cutting device is attachable and detachable by means of an attachment frame with attachment means and attachable on the outside of the bucket grabber. This is an easy to use implementation, not too much interfering with the bucket grabber's normal functioning.

Advantageously, the cutting device comprises two cutting device parts, each part being attachable to and detachable from a respective bucket grabber half, each cutting device part being provided with a cutting blade. This enables a better cutting action.

In a further embodiment, the cutting blades are attachable to each of the bucket grabber halves such that a cutting action is achievable by opening/closing the bucket grabber halves. In this way, cutting is rendered possible without the need for an additional power source.

The attachment means may comprise pins movable by an actuator, said pins being suitable for cooperating with holes provided in the bucket grabber. This is a cheap and easy implementation.

The actuator is advantageously provided in the cutting device. This results in a compact device.

The actuator may be provided with an electrical connection suitable for cooperating with an electrical supply in an assembly/disassembly station. In this way, the electrical supply can be provided outside the bucket grabber, which can thus be made lighter and more compact.

The feeding system can have a plurality of cutting devices in the home station, each specifically suited for cutting a specific kind of feed. This results in a modular system with a high flexibility. In such a system the bucket feed grabber may be provided with an image sensor, such as a camera, provided either on the grabber itself or on the cutting device, for detecting the kind of feed to be cut. With the aid of the image sensor a processing unit can select the most suitable cutting device for cutting the detected feed. That most suitable cutting device can then be fetched in the home station. This increases the versatility of the system.

Advantageously, the bucket grabber is further provided with a cutting power sensor for measuring the cutting power of the cutting blades. With the aid of a processing unit such a sensor can be used for detecting when it is time to replace the cutting blades. Thus, timely replacement is rendered possible, futher optimizing the system.

The attachable and detachable cutting device may advantageously be provided with cutting blades which are designed so as to be movable in an oscillating way. In this way their cutting ability is improved.
Figure 1 shows a feed grabber without cutting device.
Figure 2 shows a grabber half in more detail.
Figure 3 shows a part of a grabber half with an attachment frame with attachment means for attaching a cutting device.
Figure 4 shows a cutting device provided with an attachment frame and attachment means.
Figure 5 shows a part of a grabber half with an attachment frame with attachment means for attaching a cutting device.
Figure 6 shows a cutting device provided with an attachment frame and attachment means.
Figure 7 shows a feed grabber provided with a cutting device in action.

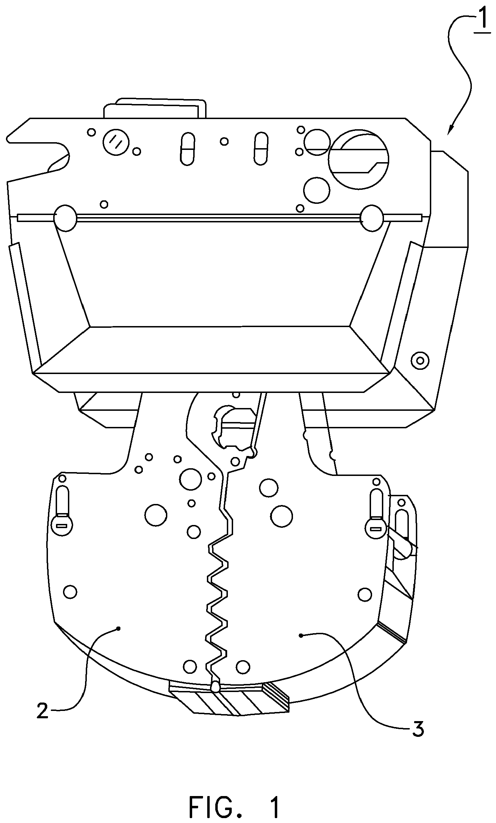

In Figure 1 a feed grabber of the clamshell bucket type is depicted. Such a device is used in an automatic feeding system, such as the Lely Vector®, for processing feed for livestock. A fixedly or preferably moveably arranged suspension part 1 accommodates two cooperating grabber halves 2, 3. The suspension part may be suitable to be moved along a rail construction (not shown) in order to enable the fetching of food from a feed kitchen with one or more feed piles. The grabber halves 2, 3 are connected in a pivotal manner to the suspension part 1 such that they can be closed and opened automatically to load and unload feed, respectively.

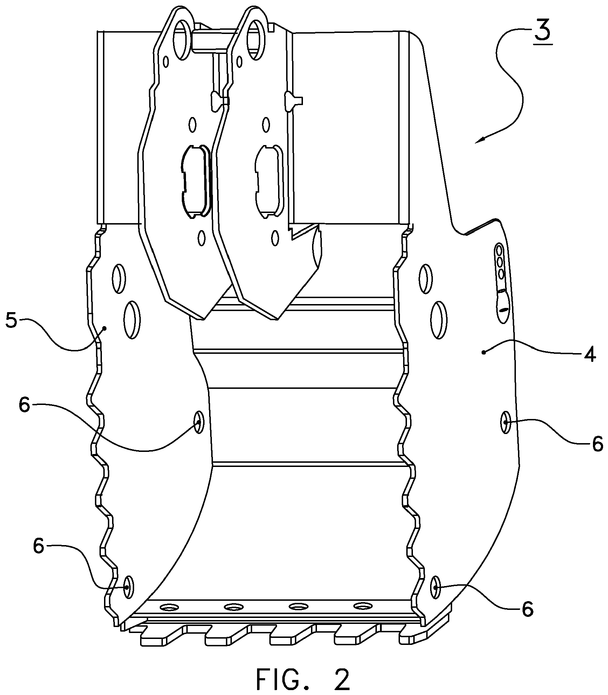

Figure 2 shows a grabber half in some more detail. The grabber half 3 has two side walls 4, 5. In these side walls 4, 5 there are provided four holes 6, two on each side. These holes 6 are suitable for cooperating with pins from an attachable cutting device, as will be shown below.

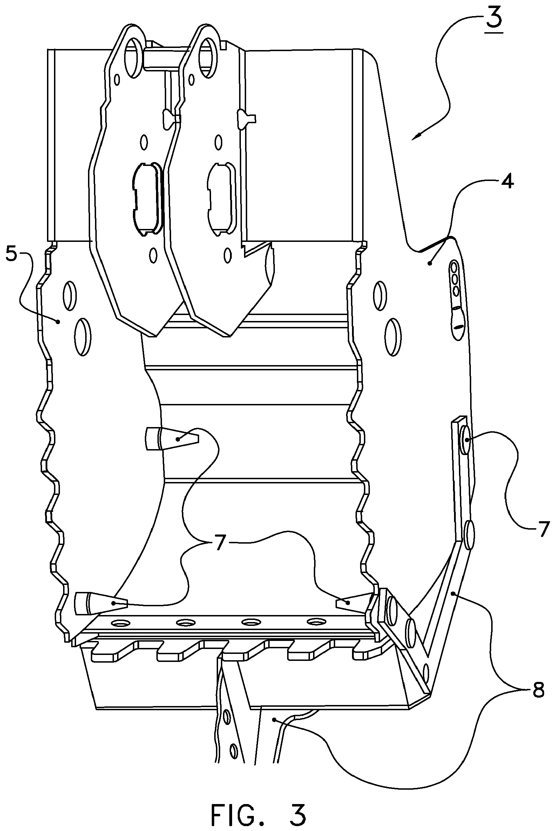

In Figure 3 a part of a grabber half with an attachment frame with attachment means suitable for attaching a cutting device is shown. The grabber half 3 with the side walls 4, 5 is provided with holes 6, but these are not visible now, because pins 7 from an attachment frame 8 are fitted in these holes. The attachment frame 8 with the pins 7 forms part of an attachable and detachable cutting device, as will be elucidated below.

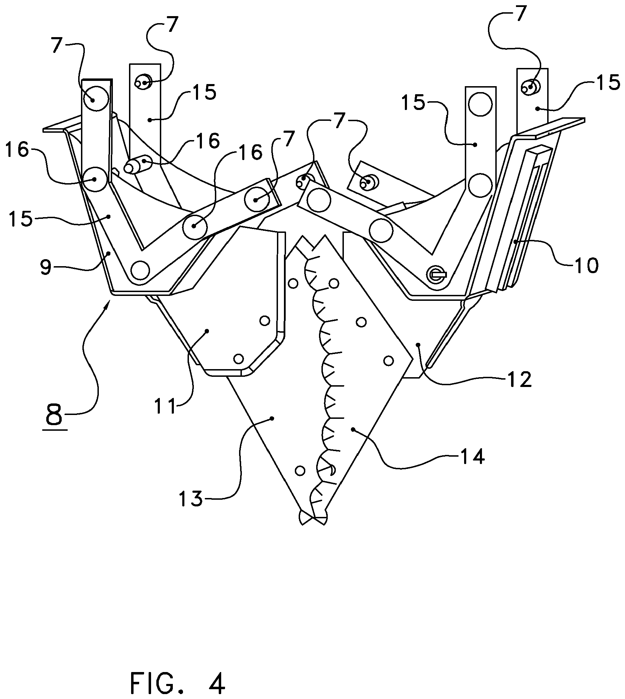

Figure 4 depicts a cutting device provided with an attachment frame and attachment means. The attachment frame 8 with the pins 7 comprises housing parts 9, 10 provided with plates 11, 12 each carrying a cutting blade 13, 14. The cutting blades 13, 14 are arranged such that a cutting action is achievable by opening/closing the bucket grabber halves 2, 3 when the cutting device is attached to the bucket grabber. The attachment frame 8 also has lateral parts 15 on which the pins 7 are provided. These lateral parts 15 with the pins 7 are moveable in- and outwardly with respect to the housing parts 9, 10 by means of an actuator, as will be described further below. In that way, the cutting device can be attached to and detached from the bucket grabber. Guiding pins 16, which are longer than the pins 7, are provided on the lateral parts 15 to assist with this movement.

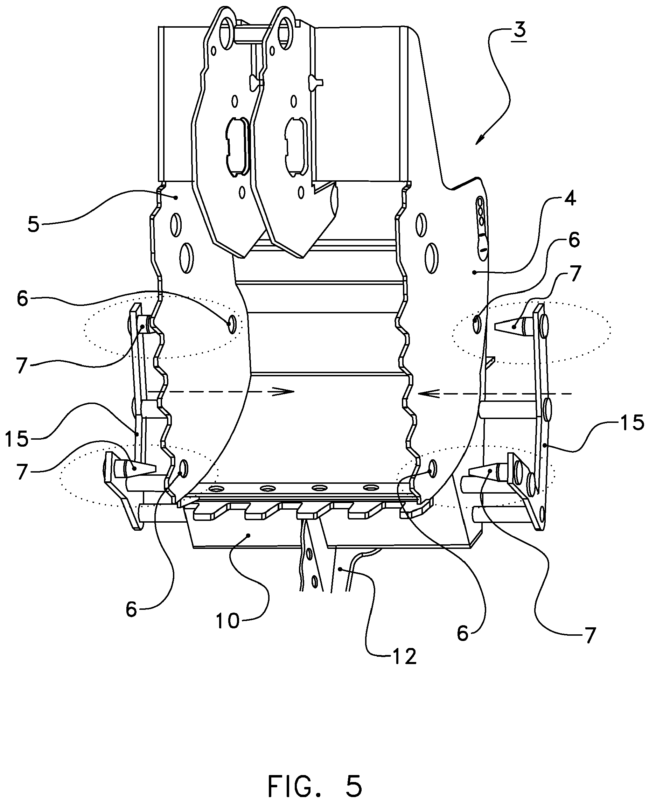

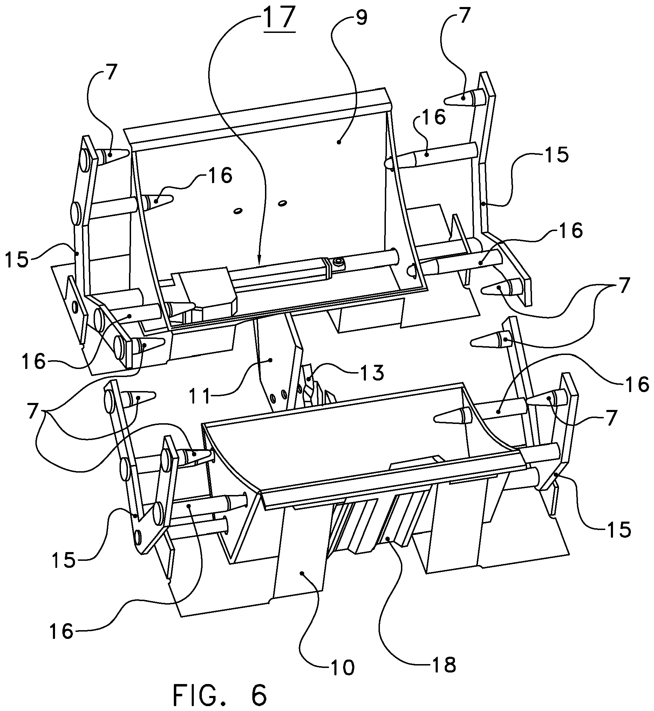

In Figure 5 a part of a grabber half with an attachment frame with attachment means suitable for attaching a cutting device is shown again, this time with lateral parts of the attachment means in an outward position. The cooperation between the holes 6 and the pins 7 is illustrated in the dotted ovals. When the lateral parts 15 move inwards (as illustrated by the two arrows) with the aid of an actuator (here not shown, but shown and elucidated further below with reference to Figure 6), the four pins 7 slide into the four holes 6, thus attaching the cutting device to the bucket grabber. When the lateral parts 15 are moved outwards, as can be seen in Figure 5, the attachment frame with the cutting device is released from the bucket grabber.

Figure 6 again shows the cutting device provided with an attachment frame and attachment means. This time the actuator 17 suitable for moving the lateral parts 15 in- and outwards relative to the housing parts 9, 10 is also visible. The linear actuator 17 (one provided on each housing part 9, 10) is able to move the lateral parts 15 of the attachment frame in- and outwards. Thus, the pins 7 can be moved into and out of the holes 6 in the grabber halves. The guiding pins 16 are longer than the pins 7 and ensure the correct guidance of the lateral parts 15 with respect to the housing parts 9, 10.

When not in use, the cutting device with its attachment frame may be kept in a suitable location, for example a home station (assembly/disassembly station) in a feed kitchen. When the cutting device is needed, the feed grabber comes to the home station and is positioned inside the attachment frame, the lateral parts being in the outward position (see Figure 5). Then the pins 7 are moved inwards into the holes 6 by means of the actuators 17 and the cutting device is attached to the feed grabber (see Figure 3). The whole assembly can then be moved out of the home station and used. When the cutting device is no longer needed, the assembly can be brought back to the home station, where the pins 7 are being moved out of the holes 6 by means of the actuators 17, so that the cutting device with its attachment means is detached fom the feed grabber.

An electrical connection 18 for the actuators 17 is provided on the housing parts 9, 10. The actuators 17 can only be operated when the cutting device is held in its home station provided with an electrical supply, since the electrical connection 18 will disconnect automatically from the electrical supply when the cutting device is taken out of the home station.

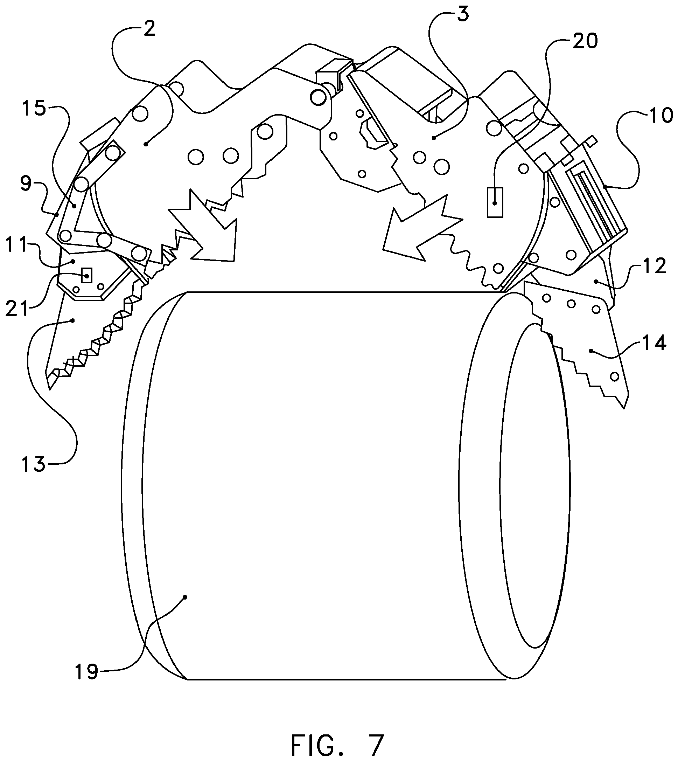

Figure 7 shows a feed grabber provided with a cutting device in action. The grabber halves 2, 3 are being moved inwards (as illustrated by the arrows) and the cutting blades 13, 14 connected to the plates 11, 12 of the housing parts 9, 10 can cut through the feed bale 19, which may be covered in feed wrapping material. It is noted that lateral parts 15 of the attachment frame are schematically only shown on grabber half 2.

The feeding system can have a plurality of cutting devices (two or more, not shown) in the home station, each specifically suited for cutting a specific kind of feed. In such a modular system the bucket feed grabber may be provided with an image sensor 20, such as a camera, provided either on the grabber itself or on the cutting device, for detecting the kind of feed to be cut. In Figure 7 there is schematically shown an image sensor 20 attached to one of the housing parts 10 of the cutting device. It is also possible to provide each housing part 9, 10 with such a sensor, although this is not necessary for a proper functioning. Of course, the image sensor may also be attached to the grabber itself. With the aid of the image sensor 20 a processing unit (not shown) can select the most suitable cutting device for cutting the detected feed. That most suitable cutting device can then be fetched in the home station. This increases the versatility of the system. It is noted that the image sensor 20 may also be provided somewhere else in the feeding system.

The cutting blades 13, 14 may be designed so as to be movable (oscillating), in order to improve their cutting ability. To this end, the cutting device may be provided with an extra power supply or a power source such as an accumulator (not shown).

Finally, a cutting power sensor 21 for measuring the cutting power of the cutting blades 13, 14 may be provided on the cutting device. With the aid of the processing unit such a sensor can be used for detecting when it is time to replace the cutting blades 13, 14. In Figure 7 the cutting power sensor 21 is shown schematically. It is provided on plate 11 carrying cutting blade 13. Of course, on the other plate 12 carrying cutting blade 14 a similar sensor 21 may be provided.

The cutting power sensor 21 is attached near the cutting blade 13. It may be an optical sensor (looking at the cutting blade 13 and/or looking at the opposite cutting blade 14) detecting a reduced sawing profile on the cutting blade(s) 13, 14, thus enabling a timely replacement of the cutting blade(s) in a simple manner. Alternatively, cutting power sensor 21 may be a time sensor measuring the cutting time of a specific cutting action. It has been found that the cutting time needed for specific cutting actions gets longer when the cutting power gets too low. This may be used to trigger a timely replacement. Cutting power sensor 21 may also be a vibration type sensor able to measure vibrations in the cutting blade 13 and/or the plate 11. It has been found that the vibration pattern changes when the cutting power gets too low. In this way the wear of the blade(s) can be determined and it (they) can be replaced in time.

## Claims

1. Bucket grabber for grabbing feed, wherein the bucket grabber (1-6) is provided with an automatically attachable and detachable cutting device (7-18) for cutting feed and/or feed wrapping material (19).

2. Bucket grabber according to claim 1, wherein the cutting device (7-18) is attachable and detachable by means of an attachment frame (8) with attachment means (7), wherein the cutting device (7-18) preferably is attachable on the outside of the bucket grabber (1-6).

3. Bucket grabber according to claim 1 or 2, wherein the cutting device (7-18) comprises two cutting device parts, each provided with a cutting blade (13, 14) which is preferably designed so as to be movable in an oscillating way, whereby each part being attachable to and detachable from a respective bucket grabber half (2, 3).

4. Bucket grabber according to claim 2 or 3, wherein the attachment means comprise pins (7) movable by an actuator (17), said pins (7) being suitable for cooperating with holes (6) provided in the bucket grabber (1-6).

5. Bucket grabber according to claim 4, wherein the actuator (17) is provided with an electrical connection (18) suitable for cooperating with an electrical supply in an assembly/disassembly station.

6. Bucket grabber according to any one of claims 1 - 5, wherein the bucket grabber (1-6) is further provided with an image sensor (20) for detecting the kind of feed to be cut.

7. Bucket grabber according to any one of claims 1 - 6, wherein the bucket grabber (1-6) is further provided with a cutting power sensor (21) for measuring the cutting power of the cutting blades (13, 14).

8. Attachable and detachable cutting device for a bucket grabber, wherein the cutting device (7-18) is automatically attachable and detachable on the outside of the bucket grabber (1-6) by means of an attachment frame (8) with attachment means (7).

9. Attachable and detachable cutting device for a bucket grabber as claimed in claim 8, wherein the cutting device (7-18) comprises two cutting device parts, each part being attachable to and detachable from a respective bucket grabber half (2, 3) and being provided with a cutting blade (13, 14), which cutting blades (13, 14) are attachable to the bucket grabber halves (2, 3) such that a cutting action is achievable by opening/closing the bucket grabber halves (2, 3).

10. Attachable and detachable cutting device for a bucket grabber as claimed in claim 8 or 9, wherein the attachment means (8) comprise pins (7) movable by an actuator (17), said pins (7) being suitable for cooperating with holes (6) provided in the bucket grabber (1-6).

11. Attachable and detachable cutting device for a bucket grabber as claimed in claim 10, wherein the actuator (17) is provided in the cutting device (7-18) and is provided with an electrical connection (18) suitable for cooperating with an electrical supply in an assembly/disassembly station.

12. Attachable and detachable cutting device for a bucket grabber as claimed in any one of claims 8 to 11, wherein the cutting device (7-18) is further provided with an image sensor (20) for detecting the kind of feed to be cut.

13. Attachable and detachable cutting device for a bucket grabber as claimed in any one of claims 8 to 12, wherein the cutting device (7-18) is further provided with at least one cutting power sensor (21) for measuring the cutting power of the cutting blades (13,14).

14. Automatic feeding system for farm animals provided with a bucket grabber according to any one of claims 1 to 7.

15. Automatic feeding system as claimed in claim 14, wherein the feeding system is provided with an image sensor (20) for detecting the kind of feed to be cut and with a processing unit for selecting a suitable cutting device from a plurality of cutting devices (7-18).
